# EUROPÄISCHE PATENTSCHRIFT

(11) **EP 0 977 416 B1**
(45) Veröffentlichungstag und Bekanntmachung des Hinweises auf die Patenterteilung: **20.09.2006**
(21) Anmeldenummer: 99440208.9
(22) Anmeldetag: 23.07.1999
(51) Int. Cl.: H04M 3/42

(54) **Verfahren, Endgerät, Knoten, Programmodul und Bedienoberfläche zur Ermittlung von für eine Kommunikationsbeziehung erforderlichen Merkmalen**
Method, terminal, node, program module and operating surface for determining features required for a communication application
Méthode, terminal, noeud, module programme et interface d'exploitation pour déterminer des caractéristiques requises pour une application de communication

(30) Priorität: 30.07.1998 DE 19834321
(43) Veröffentlichungstag der Anmeldung: 02.02.2000
(73) Patentinhaber: Naxos Data LLC, Las Vegas NV 89119 (US)
(72) Erfinder: Wajda, Wieslawa, 75210 Keltern (DE); Kruchten, Anne, 67860 Boofzheim (FR)
(74) Vertreter: Harris, Ian Richard

(56) Entgegenhaltungen:
- EP-A- 0 281 102
- EP-A- 0 529 207
- PATENT ABSTRACTS OF JAPAN vol. 015, no. 026 (E-1025), 22. Januar 1991 (1991-01-22) & JP 02 270466 A (TOSHIBA CORP), 5. November 1990 (1990-11-05)
- PATENT ABSTRACTS OF JAPAN vol. 015, no. 288 (E-1092), 22. Juli 1991 (1991-07-22) & JP 03 101452 A (MATSUSHITA GRAPHIC COMMUN SYST INC), 26. April 1991 (1991-04-26)

## Beschreibung

Die vorliegende Erfindung betrifft ein Verfahren gemäß dem Oberbegriff des Anspruchs 1, sowie ein Endgerät gemäß dem Oberbegriff des Anspruchs 8 hierfür, einen Knoten gemäß dem Oberbegriff des Anspruchs 9 hierfür, ein Programmodul gemäß dem Oberbegriff des Anspruchs 10 hierfür und eine Bedienoberfläche gemäß dem Oberbegriff des Anspruchs 11 hierfür.

Soll eine Kommunikationsbeziehung zu einem Kommunikationspartner hergestellt werden, so wird zunächst ein für die gewünschte Kommunikationsbeziehung geeignetes Endgerät ausgewählt und dann werden die für den Aufbau der Kommunikationsbeziehung erforderlichen Parameter an dem Endgerät eingegeben. Wenn z.B. eine Sprachverbindung zu einem Kommunikationspartner gewünscht ist, wird man zu einem Telefon greifen, die Teilnehmernummer eines Telefonanschlusses des gewünschten Kommunikationspartners eingeben, so daß von dem Telefon über ein Telekommunikationsnetz zu dem Teilnehmeranschluß eine Verbindung aufgebaut werden kann. Die Art der Verbindung, nämlich eine verbindungsorientierte Verbindung, wird teilnehmerseitig allein schon durch die Wahl eines Telefons als Endgerät vorgegeben. Auf die Qualität der Verbindung oder auf für die Verbindung anfallende Gebühren wird allenfalls durch die Wahl eines bestimmten Telefontyps als Quelle oder auch als Ziel der Verbindung bestimmt, z.B. durch Wahl eines Telefons für ein leitungsgebundenes Telekommunikationsnetz oder eines Telefons für ein Mobilfunk-Telekommunikationsnetz. Wenn auf der Sprachverbindung anstatt Sprache Faxnachrichten versendet werden sollen, so wird anstatt eines Telefons ein Faxgerät oder ein für das Versenden und Empfangen von Faxnachrichten geeigneter Personal Computer als Quelle und als Ziel der Verbindung eingesetzt. Auch in diesem Fall wird schon durch die Auswahl eines Faxgerätes als Endgerät eine verbindungsorientierte Verbindung aufgebaut ohne Rücksicht darauf, daß die zu übermittelnden Daten möglicherweise auch mit einer gewünschten oder zufälligen zeitlichen Verzögerung auf einer paketorientierten Verbindung versendet werden könnten. Eine zufällige zeitliche Verzögerung könnte z.B. akzeptiert werden, wenn dann die Übertragung der Faxnachricht zu geringeren Gebühren erfolgt, oder es könnte eine zeitliche Verzögerung sogar erwünscht sein, weil das Ziel der Verbindung erst nach einer solchen Verzögerung zum Empfang einer Faxnachricht bereit sein könnte.

Durch die Integration verschiedener Kommunikationsmöglichkeiten in eine einzige Telekommunikationseinrichtung, können verschiedenartige Kommunikationsbeziehungen von einer solchen Telekommunikationseinrichtung ausgehend hergestellt werden. So kann z.B. ein Personal Computer durch geeignete Schnittstelleneinrichtungen und Progammodule zu einer solchen Telekommunikationseinrichtung ausgebaut werden, von der aus Faxnachrichten, E-Mails, Internet-Kommunikation und sogar Telefongespräche möglich sind. Aber auch an einem solchen Personal Computer muß ein Benutzer zum Aufbau einer Kommunikationsbeziehung zunächst ein für eine der genannten verschiedenartigen Kommunikationsbeziehungen geeignetes Programmodul anwählen und dort eine Adresse eines gewünschten Kommunikationspartners, z.B. eine Teilnehmernummer oder eine E-Mail-Adresse angeben. Durch die Wahl eines Programmodules wird in einem solchen Fall z.B. festgelegt, daß dem gewünschten Kommunikationspartner eine Faxnachricht gesendet wird. Dazu muß dem Benutzer des Personal Computers allerdings bekannt sein, daß der Kommunikationspartner über ein Faxgerät verfügt. Zudem muß das Faxgerät des Kommunikationspartners empfangsbereit sein. Statt des Versendens einer Faxnachricht könnte es jedoch sinnvoller sein, eine E-Mail an den Kommunikationspartner zu senden, z.B. weil dies zu günstigeren Kosten möglich ist oder weil der Kommunikationspartner mit seinen momentan zur Verfügung stehenden Kommunikationsmitteln nur E-Mails empfangen kann. Außerdem muß bekannt sein, unter welcher Adresse der gewünschte Kommunikationspartner erreichbar ist. Wenn eine solche Adresse sich jedoch häufig, z.B. tageszeitabhängig, ändert, weil der Kommunikationspartner sich zu unterschiedlichen Zeiten an unterschiedlichen Orten aufhält, ist es oft unmöglich, die jeweils relevante Adresse zum Aufbau einer Kommunikationsbeziehung greifbar zu haben.

In JP 03 101452 A ist beispielsweise ein System offenbart, bei dem aufgrund der ausgewählten Kommunikationsart automatisch entweder die leitungs- oder paketvermittelte Datenübertragung ausgewählt wird.
Ferner ist in EP-A-0 281 102 ein Verfahren beschrieben, bei dem ein Anwender mittels der grafischen Darstellung eines Kommunikationsnetzes Kommunikationsparameter auswählen und ändern kann.
In JP 02 270466 A ist ein System offenbart, bei dem aufgrund der Eingabe des Namens eines empfangenden Kommunikationsmediums mittels einer Referenztabelle die Art des empfangenden Kommunikationsmediums ermittelt wird und eine geeignete Kommunikationsverbindung von dem System aus zum empfangenden Kommunikationsmedium eingerichtet wird. Ein System ähnlich dem in JP 02 270466 A beschriebenen dient als Ausgangspunkt für die Erfindung.

Aufgabe der Erfindung ist es, auf einfache und bequeme Weise Merkmale einer Kommunikationsbeziehung zu ermitteln, die jeweils gewünschte Erfordernisse erfüllt, damit auf diesen Merkmalen aufbauend die Kommunikationsbeziehung hergestellt oder, falls eine Kommunikationsbeziehung bereits besteht, diese Kommunikationsbeziehung entsprechend den gewünschten Erfordernissen modifiziert werden kann.

Diese Aufgabe wird durch ein Verfahren gemäß der technischen Lehre des Anspruchs 1, sowie ein Endgerät gemäß der technischen Lehre des Anspruchs 8, einen Knoten gemäß der technischen Lehre des Anspruchs 9, ein Programmodul gemäß der technischen Lehre des Anspruchs 10 und eine Bedienoberfläche gemäß der technischen Lehre des Anspruchs 11 gelöst. Weitere vorteilhafte Ausgestaltungen der Erfindung sind den abhängigen Ansprüchen und der Beschreibung zu entnehmen.

Im folgenden werden die Erfindung und ihre Vorteile anhand eines Ausführungsbeispiels unter Zuhilfenahme der Zeichnungen dargestellt.
- Figur 1: zeigt eine sehr schematische Anordnung zur Ausführung des erfindungsgemäßen Verfahrens und mit einer Eingabevorrichtung IN, einer Gruppiereinrichtung SORT und einer Verarbeitungseinrichtung MAT.
- Figur 2: zeigt eine Entscheidungsmatrix DEC, die zur Anwendung des erfindungsgemäßen Verfahrens eingesetzt werden kann.
- Figur 3: zeigt ein erfindungsgemäßes Endgerät TER, das eine Eingabevorrichtung INTER, ein Steuermittel CPU, einen Speicher MEM und eine Kommunikationsschnittstelle COM enthält, über die ein Kommunikationsweg CONA oder ein Kommunikationsweg CONB ansteuerbar ist.
- Figur 4: zeigt eine erfindungsgemäße Bedienoberfläche UI.
- Figur 5: zeigt einen erfindungsgemäßen Knoten NODE, der ein Steuermittel CPU, einen Speicher MEM und eine Kommunikationsschnittstelle COM enthält, über die ein Kommunikationsweg CONSRC, ein Kommunikationsweg CONA und ein Kommunikationsweg CONB jeweils miteinander schaltbar sind.
- Figur 6: zeigt eine erfindungsgemäßes Programmodul PRG.

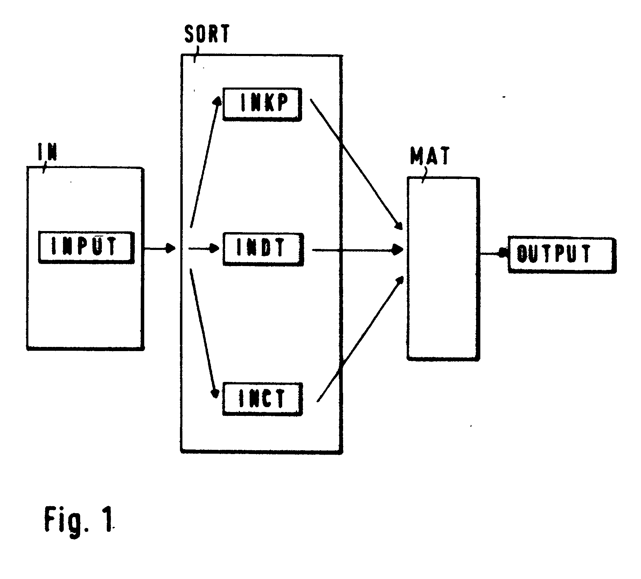

In Figur 1 ist eine sehr schematische Anordnung dargestellt, anhand derer sich das erfindungsgemäße Verfahren beispielhaft darstellen läßt, eine detailliertere Darstellung der Erfindung wird anhand von Betriebsmitteln einer Telekommunikationseinrichtung später noch erläutert. Von einer Eingabevorrichtung IN werden Eingangsdaten INPUT erfaßt. Die Eingabevorrichtung IN kann z.B. eine graphische Bedienoberfläche oder eine Tastatur sein. Die Eingangsdaten INPUT betreffen Daten, die für eine Kommunikationsbeziehung erforderlich sind, z.B. eine Telefonnummer oder eine E-Mail-Adresse eines gewünschten Kommunikationspartners, eine Angabe, daß Sprachdaten zu versenden sind und eine Angabe, daß die Daten auch verzögert zu dem Kommunikationspartner gelangen dürfen. Die Eingangsdaten INPUT werden von der Eingabevorrichtung IN dann an eine Gruppiereinrichtung SORT übermittelt, verdeutlicht durch einen Pfeil, der den Datenfluß der Eingangsdaten INPUT hin zu der Gruppiereinrichtung SORT andeutet. Die Gruppiereinrichtung SORT gruppiert dann diese Eingangsdaten INPUT in Gruppen von Daten, indem sie eine Zugehörigkeit der einzelnen Bestandteile der Eingangsdaten INPUT entweder zu einer ersten Datengruppe INKP oder zu einer zweiten Datengruppe INDT oder zu einer dritten Datengruppe INCT ermittelt. Der Vorgang des Eingruppierens ist durch drei Pfeile veranschaulicht, die den Weg der Eingangsdaten INPUT in die einzelnen Datengruppen INKP, INDT und INCT andeuten. In die erste Datengruppe INKP werden von der Gruppiereinrichtung SORT diejenigen der Eingangsdaten INPUT eingruppiert, die Merkmale aufweisen, welche die an der Kommunikationsbeziehung beteiligten Kommunikationspartner betreffen. Im obigen Beispiel werden die Telefonnummer und die E-Mail-Adresse des gewünschten Kommunikationspartners in diese erste Datengruppe INKP von der Gruppiereinrichtung SORT eingeordnet. In die zweite Datengruppe INDT gruppiert die Gruppiereinrichtung SORT diejenigen der Eingangsdaten INPUT ein, welche im Rahmen der Kommunikationsbeziehung zu übertragende Datenarten betreffen, im obigen Beispiel die Angabe, daß Sprachdaten zu versenden sind. Schließlich ordnet die Gruppiereinrichtung SORT diejenigen der Eingangsdaten INPUT der dritten Datengruppe INCT zu, welche eine mögliche Verbindungsart der gewünschten Kommunikationsbeziehung betreffen, im Beispiel also die Angabe, daß die Daten auch verzögert zu dem Kommunikationspartner gelangen dürfen.

Die in die Datengruppen INKP, INDT und INCT gruppierten Eingangsdaten INPUT gibt die Gruppiereinrichtung SORT dann an eine Verarbeitungseinrichtung MAT weiter. Durch drei separate Pfeile ist in Figur 1 verdeutlicht, daß die Eingangsdaten INPUT in drei vorgruppierten Datenströmen in die Verarbeitungseinrichtung MAT gelangen, die durch einen Hinweis auf je eine der drei Datengruppen INKP, INDT und INCT unterschieden werden können. Ein solcher Hinweis kann z.B. ein Kennzeichner sein, den die Gruppiereinrichtung SORT zu den einzelnen Bestandteilen der Eingangsdaten INPUT vor dem Versand an die Verarbeitungseinrichtung MAT hinzufügt und der die Daten als zu jeweils einer der Datengruppen INKP, INDT und INCT zugehörig kennzeichnet.

Die Verarbeitungseinrichtung MAT kann mit Hilfe einer Entscheidungsmatrix die von ihr empfangenen Datengruppen INKP, INDT und INCT in Ausgabedaten OUTPUT umsetzen, welche die Merkmale einer Kommunikationsbeziehung enthalten, die die durch die Eingangsdaten INPUT vorgegebenen Erfordernisse erfüllt. Mit den Ausgabedaten OUTPUT kann dann die gewünschte Kommunikationsbeziehung von einer Telekommunikationseinrichtung hergestellt oder eine bestehende Kommunikationsbeziehung modifiziert werden. Solche Ausgangsdaten können z.B. zur Erfüllung vorgegebener Erfordernisse dazu anweisen, bei einem Anbieter für Telekommunikationsdienstleistungen eine Kommunikationsverbindung mit einer bestimmten Mindestübertragungsrate anzufordern, zu versendende Daten aufgrund eingeschränkter Auswertungsmöglichkeiten in der Telekommunikationseinrichtung des Kommunikationspartners in ein vorbestimmtes Datenformat zu konvertieren und diese Daten vor dem Versand mit einer Kennung zu versehen, damit sie in der empfangenden Telekommunikationseinrichtung an eine für die Daten geeignete Datensenke gelangen.

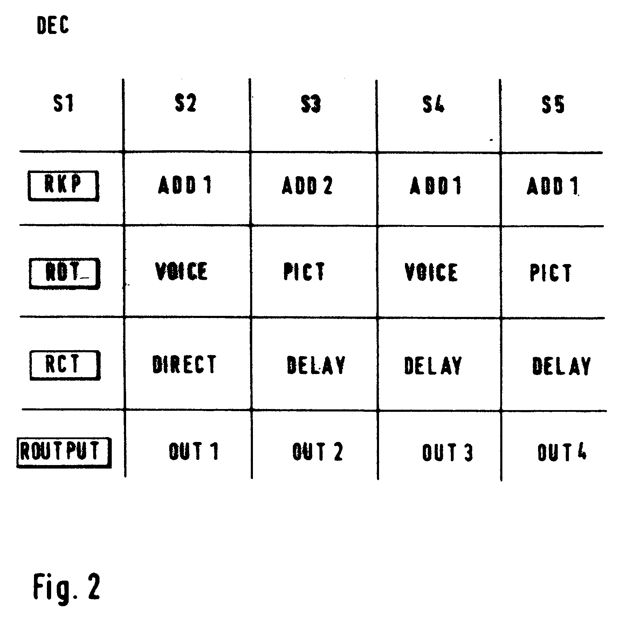

Ein Beispiel einer besonders einfachen Entscheidungsmatrix, bezeichnet als Entscheidungsmatrix DEC, ist in Figur 2 dargestellt. Die Spalten der Entscheidungsmatrix DEC sind von links nach rechts mit den Indizes S1, S2, S3, S4 und S5 markiert. Die Reihen der Entscheidungsmatrix DEC tragen von oben nach unten die Bezugszeichen RKP, RDT und RCT sowie ROUTPUT, die mit den aus Figur 1 bekannten Bezeichnungen der Datengruppen INKP, INDT und INCT sowie der Ausgabedaten OUTPUT korrelieren. In den Reihen RKP, RDT und RCT sind im folgenden näher erläuterte Merkmalsindizes eingetragen, die jeweils auf Merkmale hinweisen, die Daten aus den aus Figur 1 bekannten Datengruppen INKP, INDT und INCT aufweisen können. Die unterste Reihe der Entscheidungsmatrix DEC zeigt Merkmalsgruppen, die alle Merkmale enthalten, welche die als Ausgabedaten OUTPUT aus Figur 1 bekannten Daten ebenfalls tragen.

In die Reihe RKP in der Entscheidungsmatrix DEC sind beispielhaft die aus dem obigen Beispiel bekannte Telefonnummer des gewünschten Kommunikationspartners als Merkmalsindex ADD1 in die Spalte S2, S4 und S5 und dessen E-Mail-Adresse als Merkmalsindex ADD2 in der Spalte S3 eingetragen. Es wäre aber auch möglich, unter dem Merkmalsindex ADD1 den Namen eines ersten, und unter dem Merkmalsindex ADD2 den Namen eines zweiten Kommunikationspartners in die Entscheidungsmatrix DEC einzutragen und aus der Entscheidungsmatrix DEC dann die zu den Merkmalsindizes ADD1 und ADD2 jeweils zugehörigen Telefonnummern, E-Mailadressen oder Telefaxnummern zu gewinnen. In die nächstuntere Reihe RDT in der Entscheidungsmatrix DEC sind zu übertragende Datenarten eingetragen, als Beispiel in den Spalten S2 und S4 ein Merkmalsindex VOICE, der auf Sprachdaten hinweist, und in den Spalten S3 und S5 ein Merkmalsindex PICT, der Bilddaten charakterisiert. Die darunterliegende Reihe RCT, die eine mögliche Verbindungsart der gewünschten Kommunikationsbeziehung betrifft, enthält in der Spalte S2 einen Merkmalsindex DIRECT, der ein unmittelbares Übertragen von Daten anweist, und einen Merkmalsindex DELAY, der die Erlaubnis für ein verzögertes Übertragen von Daten anzeigt, in den Spalten S3, S4 und S5. Die unterste Reihe ROUTPUT der Entscheidungsmatrix DEC enthält Merkmalsgruppen namens OUT1, OUT2, OUT3 und OUT4. Diese Merkmalsgruppen enthalten alle Merkmale, die für eine Kommunikationsbeziehung erforderlich sind, die die in der jeweiligen Spalte angegebenen Erfordernisse erfüllt. So kann z.B. die Merkmalsgruppe OUT1 eine direkte Verbindung zu einem Telefon beschreiben, die Merkmalsgruppe OUT2 einen E-Mail Datentransfer, die Merkmalsgruppe OUT3 eine Verbindung zu einer Voicebox und die Merkmalsgruppe OUT4 eine Verbindung zu einem Faxgerät.

Im folgenden wird angenommen, daß die aus Figur 1 bekannte Verarbeitungseinrichtung MAT die Entscheidungsmatrix DEC als Entscheidungsmatrix verwendet. Erhält nun die Verarbeitungseinrichtung MAT in die Datengruppen INKP, INDT und INCT von der Gruppiereinrichtung SORT vorgruppierte Eingangsdaten, kann die Verarbeitungseinrichtung MAT die in diesen Eingangsdaten enthaltenen Merkmale mit den Merkmalen der Merkmalsindizes der Entscheidungsmatrix DEC vergleichen. Die Eingangsdaten der ersten Datengruppe INKP vergleicht die Gruppiereinrichtung SORT mit den Merkmalsindizes der Reihe RKP, die Eingangsdaten der zweiten Datengruppe INDT mit den Merkmalsindizes der Reihe RDT und die Eingangsdaten der dritten Datengruppe INCT mit den Merkmalsindizes der Reihe RCT. Wenn die Eingangsdaten der jeweiligen Datengruppen INKP, INDT und INCT mit den entsprechenden Merkmalsindizes der Reihen RKP, RDT und RCT in einer der Spalten S2, S3, S4 oder S5 übereinstimmen, so liest die Verarbeitungseinrichtung MAT die in dieser Spalte angegebene Merkmalsgruppe OUT1, OUT2, OUT3 oder OUT4 aus und bildet aus deren Merkmalen die Ausgangsdaten OUTPUT. Wenn in den Eingangsdaten enthalten sind bezüglich der ersten Datengruppe INKP die Teilnehmernummer eines gewünschten Kommunikationspartners, bezüglich der zweiten Datengruppe INDT eine Angabe, daß Sprachdaten zu übertragen sind, und bezüglich der dritten Datengruppe INCT eine Freigabe, daß die zu übertragenden Daten auch verzögert übertragen werden dürfen, dann ermittelt die Verarbeitungseinrichtung MAT durch Vergleichen, daß dieses Erfordernisse durch die Merkmalsgruppen der Spalte S4 erfüllt sind. Dann liest die Verarbeitungseinrichtung MAT die in der Spalte S4 angegebene Merkmalsgruppe OUT3 aus und generiert aus deren Merkmalen die Ausgangsdaten OUTPUT, die wie erwähnt eine Verbindung zu einer Voicebox beschreiben. Hätten die Eingangsdaten bezüglich der dritten Datengruppe INCT statt einer Freigabe zu einer verzögerten Datenübertragung eine Anforderung zu einer direkten, unverzögerten Datenübertragung enthalten, hätte die Verarbeitungseinrichtung MAT beim Vergleich der Eingangsdaten mit den Merkmalsindizes der Reihen RKP, RDT und RCT festgestellt, daß die Erfordernisse der Eingangsdaten durch die Angaben der Spalte S1 erfüllt sind und dann die Ausgabedaten OUTPUT mit den Merkmalen der Merkmalsgruppe OUT gebildet.

Die Entscheidungsmatrix DEC aus Figur 2 ist, wie bereits erwähnt, aus Gründen einer anschaulichen Beschreibung eine besonders einfache Variante einer Entscheidungsmatrix. Wesentlich detailliertere Ausgestaltungen einer Entscheidungsmatrix können jederzeit gemäß den jeweiligen Erfordernissen gebildet werden. Die Entscheidungsmatrix DEC kann z.B. um weitere Spalten erweitert werden, in die weitere Merkmale der Datengruppen INKP, INDT und INCT je in Dreiergruppen und sich daraus jeweils ergebende Ausgabedaten OUTPUT eingetragen werden. Die Entscheidungsmatrix DEC kann auch in einen Entscheidungsbaum mit einzelnen "Wenn-Dann"-Entscheidungsschritten aufgelöst werden, der dann z.B. in ein Computer-Programm umsetzbar ist.

Ein Kommunikationspartner kann neben seiner Adresse zusätzlich durch die ihm zur Verfügung stehenden Mittel gekennzeichnet werden, z.B. durch Mittel zur Nutzung verschiedener Übertragungsmedien oder durch eine Ausstattung mit einer Software zum Empfang oder zum Versenden bestimmter Datenarten. Als Kommunikationspartner können auch mehrere Partner gewählt werden. Die Verbindungsart beschreibt, ob der Kommunikationspartner zur Kommunikation anwesend (on-line) oder nicht anwesend (off-line) sein muß, z.B. on-line für ein Gespräch, off-line für später auswertbare Daten. Über die Verbindungsart kann z.B. auch eine konstante oder eine sich dynamisch adaptierende Übertragungsrate in einer bestimmten Höhe auf einer Verbindung verlangt werden. Durch die Datenart können "endliche" Daten (z.B. Datenfile) von "unendlichen" Daten (z.B. Gespräch) unterschieden werden. Die Begriffe "endlich" und "unendlich" sind so zu verstehen, daß schon vor einem Versenden eines Datenfiles bekannt ist, welchen Umfang das Datenfile besitzt, während bei einem Gespräch dessen Dauer zumeist nicht vorhersehbar ist. Unterscheidungen wie z.B. unterschiedliche Dateiformate sind unter dem Oberbegriff Datenart möglich.

In Figur 1 sind zur deutlichen Darstellung die Gruppiereinrichtung SORT und die Verarbeitungseinrichtung MAT als getrennte Einrichtungen dargestellt und in ihrer Funktion erläutert. In der Praxis können jedoch beide Einrichtungen kombiniert sein. Z.B. kann ein Prozessor zur Datenverarbeitung sowohl die Funktionen der Gruppiereinrichtung SORT als auch der Verarbeitungseinrichtung MAT ausführen, wenn ihm die zur Ausführung jeweils erforderlichen Befehlssequenzen zugeführt werden. Vorteilhafterweise werden dabei die Funktionen der Gruppiereinrichtung SORT und die Funktionen der Verarbeitungseinrichtung MAT jeweils als getrennte Programme oder Programmfunktionen erstellt. Mit der Programmfunktion für die Gruppiereinrichtung SORT kann dann der Prozessor die Eingangsdaten in die Datengruppen INKP, INDT und INCT vorgruppieren und in vorgruppierter Form in einen Speicher schreiben. Anschließend kann der Prozessor diese vorgruppierten Daten wieder aus dem Speicher entnehmen und mit der Programmfunktion der Verarbeitungseinrichtung MAT in der beschriebenen Weise weiterverarbeiten.

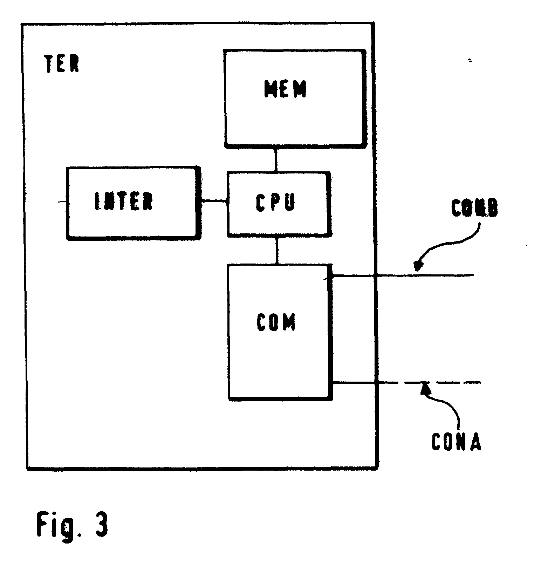

In Figur 3 ist ein erfindungsgemäßes Endgerät TER dargestellt, über das Kommunikationsbeziehungen hergestellt und unterhalten werden können. Das Endgerät TER kann z.B. ein komfortabler Telefonapparat sein, über den auch weitere, über die reine Telefonie hinausgehende Kommunikationsbeziehungen möglich sind, z.B. Kommunikation mit dem Internet. Das Endgerät TER kann aber auch ein Personal Computer sein, über den Telefonie und Faxübertragung, wie auch modernere Kommunikationsformen, wie z.B. E-Mail Dienste und Internet-Kommunikation machbar sind. Weitere Bauformen des Endgerätes TER sind ebenfalls denkbar, z.B. die eines universell einsetzbaren sogennanten "Persönlichen Kommunikators", mit dem man verschiedene Telekommunikationsnetze, Mobilfunk-Telekommunikationsnetze oder leitungsgebundene Telekommunikationsnetze, auch mit unterschiedlichem Umfang an angebotenen Dienstleistungen, nutzen kann. Gerade dann erweist sich die Erfindung als sehr nützlich, weil durch die Erfindung das umfangreiche und für einen Anwender oft zu schwer bedienbare Potential eines solchen "Persönlichen Kommunikators", wie in den folgenden Abschnitten noch deutlich wird, einfach, effizient und damit nutzbringend einsetzbar wird.

Das Endgerät TER verfügt über eine Kommunikationsschnittstelle COM, über die das Endgerät TER zwei unterschiedliche Kommunikationswege CONA und CONB ansprechen kann, die beispielhaft für weitere, in Figur 3 nicht dargestellte Kommunikationswege stehen. Die Darstellung unterschiedlicher Kommunikationswege in Figur 3 als getrennte Pfade dient lediglich der Anschaulichkeit. In der Praxis können zwar unter den Kommunikationswegen CONA und CONB durchaus zwei unterschiedliche Kommunikationsmedien gemeint sein, z.B. zwei physikalisch getrennte Teilnehmeranschlußleitungen eines Telekommunikationsnetzes. Ebenso ist es aber möglich, daß auf ein und demselben Medium, z.B. auf einer Teilnehmeranschlußleitung mehrere Kommunikationsformen alternativ oder zugleich ausgeführt werden können. Es kann z.B. auf der erwähnten Teilnehmeranschlußleitung auf einem Kanal eine Telefonverbindung unterhalten werden und gleichzeitig auf einem anderen Kanal ein E-Mail versendet werden. Dies ist z.B. möglich, wenn die Teilnehmeranschlußleitung zu einem ISDN-Telekommunikationsnetz gehört.

Die Kommunikationsschnittstelle COM wird durch ein Steuermittel CPU gesteuert. Das Steuermittel CPU weist die Kommunikationsschnittstelle COM an, wie die Kommunikationswege CONA und CONB auszuwählen und zu nutzen sind. Das Steuermittel CPU kann z.B. ein Prozessor sein, der Befehlssequenzen aus einem Speicher MEM erhält, der in Figur 3 ebenfalls dargestellt ist. Das Steuermittel CPU kann den Speicher MEM zur Speicherung von Daten nutzen. Wie später noch erläutert wird, kann das Steuermittel CPU sowohl die Funktionen der aus Figur 1 bekannten Gruppiereinrichtung SORT als auch die der Verarbeitungseinrichtung MAT wahrnehmen.

Weiterhin ist in Figur 3 eine Eingabevorrichtung INTER dargestellt, die in ihrer Funktion der aus Figur 1 bekannten Eingabevorrichtung IN entspricht. So werden von der Eingabevorrichtung INTER Daten ebenfalls erfaßt, die für eine Kommunikationsbeziehung erforderlich sind. Die Eingabevorrichtung INTER kann z.B. ein einfaches Tastenfeld sein, an dem beispielsweise ein Name oder eine Telefonnummer eines gewünschten Kommunikationspartners und eine Tastenbefehlsfolge als Hinweis auf die im Rahmen der Kommunikationsbeziehung zu übertragenden Datenarten eingegeben werden kann. Stehen allerdings umfangreichere Kommunikationsmöglichkeiten zur Verfügung, z.B. an einem besonders für Telekommunikation ausgerüsteten Personal Computer oder an einem "Persönlichen Kommunikator", ist die Eingabevorrichtung INTER vorteilhaft eine graphische Bedienoberfläche, die durch eine sogenannte Maus bedienbar ist. Zur Vereinfachung der Darstellung wird im folgenden die Ausführungsform der Eingabevorrichtung INTER als graphische Bedienoberfläche nur als eine reine Eingabeschnittstelle beschrieben. Dem Fachmann ist jedoch bekannt, daß eine graphische Bedienoberfläche ein eng verzahntes Zusammenwirken von Eingabemitteln, z.B. der erwähnten Maus und dem Tastenfeld, und von Ausgabemitteln ist, z.B. einem Monitor oder einem Display. Weiterhin ist nicht im Detail weiter ausgeführt, daß in der Praxis diese Eingabe- und Ausgabemittel von einem Steuermittel, z.B. dem Steuermittel CPU, mit Hilfe von Befehlssequenzen gesteuert werden können, die das Steuermittel aus einem Speicher bezieht, z.B. dem Speicher MEM. Im folgenden sei also zunächst eine graphische Bedienoberfläche als eine selbständige Eingabevorrichtung betrachtet.

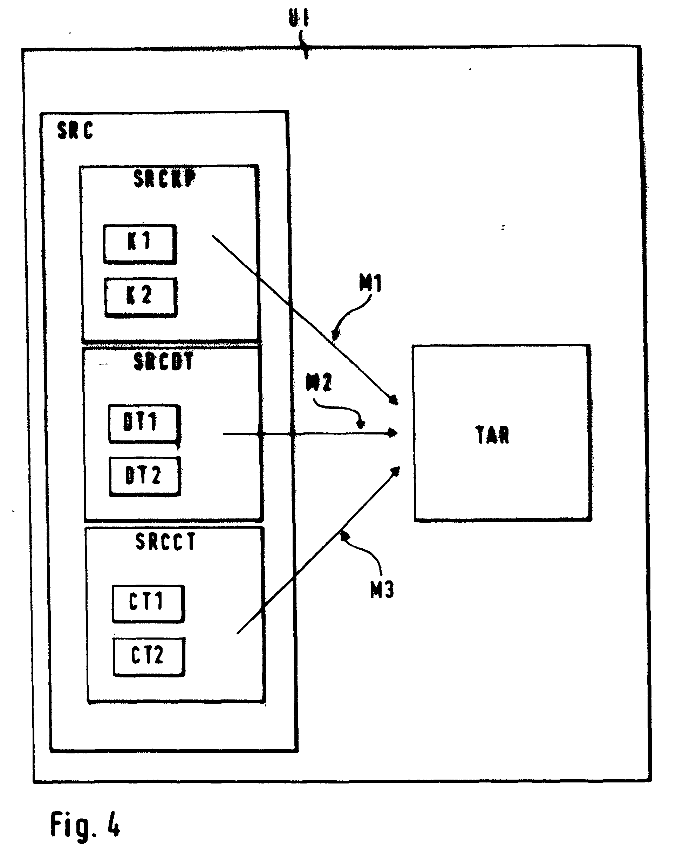

Eine mögliche, schematisierte Ausführungsform einer solchen graphischen Bedienoberfläche ist als graphische Bedienoberfläche Ul in Figur 4 dargestellt. Die Darstellung in Figur 4 beschränkt sich auf eine mögliche Gestaltung der graphischen Ausgabe der Bedienoberfläche Ul, z.B. an einem Monitor. Mittel zur Eingabe von Daten, z.B. ein Tastenfeld und eine Maus, und Mittel zur Steuerung der Bedienoberfläche Ul, z.B. ein Prozessor und ein Speicher, sind in Figur 4 nicht extra gezeigt. Die Bedienoberfläche Ul ist grob in zwei Hauptfelder unterteilt, die als Quellfeld SRC und als Zielfeld TAR bezeichnet sind. In dem Quellfeld SRC sind Elemente dargestellt, die stellvertretend für Bestandteile der aus Figur 1 bekannten Eingangsdaten INPUT stehen. Die Elemente K1 und K2 sind jeweils eine graphische Darstellung, also ein Symbol oder ein sogenanntes "Icon", für einen möglichen Kommunikationspartner. Ein solches Symbol kann z.B. ein Bild des Partners sein oder ein Eintrag in einer Art graphisch umgesetztem Notizbuch. Neben den Elementen K1 und K2 kann die Bedienoberfläche Ul auch weitere, in Figur 4 nicht dargestellte Elemente aufweisen, die jeweils für weitere Kommunikationspartner oder auch für unterschiedliche Kommunikationsmöglichkeiten stehen können, über die ein Kommunikationspartner verfügt, z.B. über eine Kommunikationsmöglichkeit mit einem Mobilfunk-Endgerät und eine Kommunikationsmöglichkeit mit einem leitungsgebundenen Faxgerät. Dazu kann z.B. ein Abbild des jeweiligen Kommunikationspartners als Icon auf der Bedienoberfläche Ul gezeigt sein, das den Kommunikationspartner zusammen mit einem Mobilfunk-Endgerät bzw. mit einem Faxgerät darstellt. Die Verwendung der Elemente K1 und K2 und weiterer noch zu erläuternder Elemente der Bedienoberfläche Ul werden später genau erklärt.

In einer äußerst vorteilhaften Ausgestaltung der Erfindung sind die Elemente K1 und K2 bereits in einem Feld SRCKP zusammengefaßt, in dem nur Elemente stehen, welche die an der Kommunikationsbeziehung beteiligten Kommunikationspartner symbolisieren und damit der aus Figur 1 bekannten Datengruppe INKP angehören. In einem weiteren Feld SRCDT sind Elemente dargestellt, die Eingangsdaten aus der aus Figur 1 bekannten Datengruppe INDT repräsentieren, also im Rahmen der Kommunikationsbeziehung zu übertragende Datenarten charakterisieren. So kann z.B. das Element DT1 für eine Angabe stehen, daß Sprachdaten zu versenden sind und das Element DT2 ein Symbol für ein zu versendendes Datenfile sein. Konsequenterweise sind dann in einem Feld SRCCT Elemente zusammengefaßt, die als Symbole für Daten aus der Datengruppe INCT dienen, welche eine mögliche Verbindungsart der gewünschten Kommunikationsbeziehung betrifft. Das Element CT1 kann z.B. in Form eines Brief-Symboles gestaltet sein und damit darauf hinweisen, daß zu versendende Daten in einer Offline-Kommunikation verzögert zu dem Kommunikationspartner gelangen dürfen. Mit Hilfe des Elementes CT2 andererseits kann z.B. festgelegt werden, daß innerhalb einer Online-Verbindung kommuniziert werden soll, weil Sprachinformationen im Rahmen eines Gespräches ausgetauscht werden sollen oder weil eine Datenaustauschsequenz mit sofortiger Quittierung empmpfangener Daten verlangt wird. Die Funktion des Elementes CT2 wird für einen Benutzer z.B. erkennbar, indem für das Element CT2 ein Bild eines Telefones verwendet wird. Die Unterteilung des Quellfeldes SRC in die Felder SRCKP, SRCDT und SRCCT analog zu den Datengruppen INKP, INDT und INCT-und die Vorgruppierung der Elemente K1, K2, DT1, DT2, CT1 und CT2 in diese Felder dient einer übersichtlichen Darstellung für den Benutzer und erlaubt diesem, wie im folgenden noch näher erläutert, in strukturierter Weise die Eingangsdaten INPUT in das Endgerät TER einzugeben. Diese Vorgruppierung ist zwar vorteilhaft, jedoch nicht zwingend erforderlich, da die genannten Elemente innerhalb des Quellfeldes SRC auch unstrukturiert verteilt oder nach anderen Gesichtspunkten geordnet sein können. Es können z.B. Gruppen von Eingangsdaten mit jeweils einem Element aus den Datengruppen INKP, INDT und INCT innerhalb des Quellfeldes SRC gebildet sein, die von einem Nutzer der Bedienoberfläche Ul häufig gebraucht werden und deshalb schon gruppenweise zur Nutzung bereit stehen.

Aus dem Quellfeld SRC können die Elemente K1, K2, DT1, DT2, CT1 und CT2 ausgewählt werden und dem Zielfeld TAR z.B. mit Hilfe einer Maus in Form einer sogenannten "Drag-and-Drop"-Mausaktion zugeführt werden, bei der mit der Maus ein Element markiert, auf ein Ziel "gezogen" und dort "fallengelassen" werden. Solche Vorgehensweisen mit einer Maus sind jedem Benutzer eines graphisch orientierten Betriebsystemes für einen Personal Computer, z.B. Windows der Firma Microsoft, bestens bekannt. Die Mausaktionen sind in Figur 4 durch Pfeile angedeutet, die als Mausaktion M1, Mausaktion M2 und Mausaktion M3 bezeichnet sind. Aus dem Quellfeld SRC können durch die Mausaktion M1 die Elemente K1 oder K2, durch die Mausaktion M2 die Elemente DT1 und DT2 und durch die Mausaktion M3 die Elemente CT1 und CT2 auf das Zielfeld TAR gezogen werden. Weitere in Figur 4 nicht dargestellte Felder sind auf der Bedienoberfläche Ul möglich, z.B. ein "Lösch"-Feld, kenntlich gemacht durch ein Icon in Form eines Abfalleimers. Wenn ein Benutzer ein Element aus dem Zielfeld TAR wieder entfernen will, weil er statt dessen ein anderes Element derselben Datengruppe in das Zielfeld TAR ziehen möchte, so muß er zuvor lediglich per Mausaktion das zu entfernende Element von dem Zielfeld TAR auf das "Lösch"-Feld ziehen.

Durch jeweils eine der Mausaktionen M1, M2 oder M3 führt der Benutzer jeweils eines Elemente K1, K2, DT1, DT2, CT1 und CT2 dem Zielfeld TAR zu. Das Zielfeld TAR erfaßt dann die drei von dem Benutzer auf diese Weise ausgewählten Elemente. Damit sind dann alle für eine Klassifizierung einer Kommunikationsbeziehung nötigen Merkmale definiert. Es ist allerdings auch möglich, daß aus den Datengruppen INKP, INDT und INCT jeweils mehr als ein Element ausgewählt wird. So kann z.B. eine Kommunikationsbeziehung nicht nur mit einem Kommunikationspartner gewünscht sein, sondern eine Konferenzschaltung mit zwei oder mehreren Kommunikationspartnern verlangt werden. Der Benutzer kann dann z.B. beide Elemente K1 und K2 aus dem Feld SRCKP in das Zielfeld TAR ziehen und somit den Wunsch nach einer gleichzeitigen Kommunikationsbeziehung zu beiden, jeweils durch diese Elemente symbolisierten Kommunikationspartnern anmelden. Wählt der Benutzer aus dem Quellfeld SRC mehrere Elemente aus, die sich in ihrer Funktion widersprechen, z.B. die Elemente CT1 und CT2, die für Offline - bzw. für Online-Kommunikation stehen, und zieht diese Elemente per Mausaktion in das Zielfeld TAR, so kann die Bedienoberfläche die jeweils letzte der konkurrierenden Eingaben als gültig annehmen oder den Benutzer durch eine Meldung auf den Fehler aufmerksam machen und zu einer korrekten Eingabe auffordern.

Vorteilhafterweise überprüft die Bedienoberfläche Ul, ob innerhalb des Zielfeldes TAR alle für eine Klassifizierung einer Kommunikationsbeziehung nötigen Elemente enthalten sind, bevor die Bedienoberfläche Ul mit der Weiterverarbeitung der Merkmale fortfährt, die durch die in dem Zielfeld TAR enthaltenen Elemente beschrieben sind. Die Bedienoberfläche Ul fordert den Benutzer nötigenfalls zur Eingabe fehlender Elemente auf oder fügt selbständig ergänzende Merkmale hinzu, die typischerweise zu den von dem Benutzer bereits ausgewählten Merkmalen kombiniert werden. Auch durch eine geeignete Gestaltung und Funktionsweise der Bedienoberfläche Ul kann der Benutzer dazu angeleitet werden, alle für eine Klassifizierung einer Kommunikationsbeziehung nötigen Elemente aus dem Quellfeld SRC in das Zielfeld TAR zu ziehen. Dazu kann das Zielfeld TAR in Ziel-Teilfelder unterteilt werden, die den Feldern SRCKP, SRCDT und SRCCT des Quellfeldes SRC entsprechen. Wenn der Benutzer dann ein Element aus einem der Felder SRCKP, SRCDT und SRCCT in den Bereich des Zielfeldes TAR zieht und dort ablegt, ordnet die Bedienoberfläche Ul das jeweilige Element unmittelbar in dasjenige der Ziel-Teilfelder ein, das dem Feld SRCKP, SRCDT oder SRCCT entspricht, aus dem das abgelegte Element stammt. Dadurch wird dem Benutzer bei der Betrachtung des Zielfeldes TAR leicht ersichtlich, welches der Ziel-Teilfelder noch nicht durch ein Element belegt ist und demzufolge welche Eingabe noch gemacht werden muß, damit alle für eine Klassifizierung der gewünschten Kommunikationsbeziehung erforderlichen Merkmale vorhanden sind.

Wenn der Benutzer alle für eine Klassifizierung der gewünschten Kommunikationsbeziehung erforderlichen Merkmale eingegeben hat, kann die Bedienoberfläche Ul selbständig mit der Weiterverarbeitung der eingegebenen Daten beginnen oder von dem Benutzer dazu angewiesen werden, z.B. durch Drücken einer Taste auf einem der Bedienoberfläche Ul zugehörigen Tastenfeld oder durch "Drücken" eines "Startbuttons" auf der Bedienoberfläche Ul, also durch Anwählen und per Mausklick Aktivieren eines in Figur 4 nicht eigens dargestellten Feldes der Bedienoberfläche Ul. Mit Hilfe eines eigenen Steuermittels und eines eigenen Speichers kann die Bedienoberfläche Ul die Funktionen der aus Figur 1 bekannten Gruppiereinrichtung SORT und der Verarbeitungseinrichtung MAT erfüllen. Die Bedienoberfläche Ul gruppiert dann die Eingangsdaten in die Datengruppen INKP, INDT und INCT ein, gibt die so vorgruppierten Eingangsdaten in eine Entscheidungsmatrix ein und gewinnt aus der Entscheidungsmatrix dann Ausgangsdaten. Diese Ausgangsdaten gibt die Bedienoberfläche Ul an eine Telekommunikationseinrichtung weiter. Anhand der Ausgangsdaten kann die Telekommunikationseinrichtung die von dem Benutzer an der Bedienoberfläche Ul definierte Kommunikationsbeziehung aufbauen oder eine bestehende Kommunikationsbeziehung modifizieren.

Sofern die Bedienoberfläche Ul jedoch Teil der Eingabevorrichtung INTER und damit des Endgerätes TER ist, kann die Bedienoberfläche Ul die von dem Benutzer eingegebenen Eingangsdaten direkt aus dem Zielfeld TAR an Einrichtungen des Endgerätes TER zur Weiterverarbeitung weitergeben. Die Bedienoberfläche muß dann die Funktionen der Gruppiereinrichtung SORT und der Verarbeitungseinrichtung MAT nicht selbst erfüllen, sondern kann diese Funktionen auf Einrichtungen des Endgerätes TER verlagern. Ein solches weiteres Vorgehen wird im folgenden unter Bezugnahme auf Figur 3 ausgeführt.

Nachdem die Eingabevorrichtung INTER alle für eine Klassifizierung einer Kommunikationsbeziehung erforderlichen Merkmale als Eingangsdaten ermittelt hat, gibt die Eingabevorrichtung INTER diese Eingangsdaten zur Weiterverarbeitung an das Steuermittel CPU weiter. Dieses lädt aus dem Speicher MEM verschiedene Befehlssequenzen, nach deren Anweisungen die Steuermittel CPU die Eingangsdaten weiterverarbeitet. Das Steuermittel CPU gruppiert, wie bereits im Zusammenhang mit Figur 1 erklärt, die Eingangsdaten in die Datengruppen INKP, INDT und INCT ein, z.B. indem das Steuermittel CPU die Eingangsdaten mit Merkmalen vergleicht, die Daten als den jeweiligen Datengruppen zugehörig klassifizieren und die in dem Speicher MEM abgelegt sind. Die nach Datengruppen sortierten Daten gibt das Steuermittel CPU in eine Entscheidungsmatrix ein, z.B. in die aus Figur 2 bekannte Entscheidungsmatrix DEC, und ermittelt die für die von dem Benutzer gewünschte Kommunikationsbeziehung erforderlichen Merkmale. Mit Hilfe dieser Merkmale kann das Steuermittel CPU dann bestimmen, welcher der Kommunikationswege CONA oder CONB den Erfordernissen des Benutzers entspricht und je nach Ergebnis die Kommunikationsschnittstelle COM dazu anweisen, den Kommunikationsweg CONA oder den CONB zu aufzuschalten. In Figur 3 wird z.B. der Kommunikationsweg CONB von der Kommunikationsschnittstelle COM und damit von dem Endgerät TER genutzt. Der Kommunikationsweg CONB ist deshalb durch eine durchgezogene Linie dargestellt.

Vorteilhaft wirkt sich die Erfindung auch aus, wenn sie nicht nur zum Aufbau einer geeigneten Kommunikationsbeziehung eingesetzt wird, sondern auch zur Modifikation einer bereits bestehenden Kommunikationsbeziehung. Das Endgerät TER kann bei sich ändernden Rahmenbedingungen, z.B. bei einer sich an eine Sprachverbindung anschließende Übertragung einer E-Mail an ein und denselben Kommunikationspartner, eine bereits für die Sprachübertragung genutzte Kommunikationsbeziehung an die Erfordernisse der E-Mail-Übertragung anpassen. Dazu werden schon während der Sprachübertragung die für die Klassifizierung der gewünschten E-Mail-Übertragung erforderlichen Merkmale von dem Endgerät TER mit Hilfe der Eingabevorrichtung INTER ermittelt. Das Endgerät TER, genauer das Steuermittel CPU, gruppiert diese neuen Eingangsdaten in der bereits erläuterten Weise in die Datengruppen INKP, INDT und INCT und gewinnt mit Hilfe der Entscheidungsmatrix dann die Ausgangsmerkmale für eine Neugestaltung der Kommunikationsbeziehung, die für eine Übertragung der E-Mail geeignet sein soll. Nach Beendigung der Sprachübertragung weist das Steuermittel CPU dann die Kommunikationsschnittstelle COM an, die bestehende Kommunikationsbeziehung gemäß der ermittelten Ausgangsmerkmale für eine E-Mail-Übertragung zu modifizieren. Die Kommunikationsschnittstelle COM sendet dazu z.B. an die Telekommunikationseinrichtung des Kommunikationspartners eine Kennung, anhand derer diese Telekommunikationseinrichtung erkennen kann, daß die anschließend gesendeten Daten keine Sprachdaten sind, sondern eine E-Mail enthalten und deshalb an eine andere Datensenke innerhalb der Telekommunikationseinrichtung gelangen sollen als die Sprachdaten.

Neben der beschriebenen Eingabe von für eine Kommunikationsbeziehung erforderlichen Merkmalen an der Eingabevorrichtung INTER können solche Merkmale auch zwischen dem Endgerät TER und einem gleichartigen Partner-Endgerät ausgetauscht werden, auch ohne daß ein Benutzer einem der beiden Endgeräte einen Auftrag zum Aufbau einer Kommunikationsbeziehung gegeben hat. Ein Endgerät kann z.B. dem anderen mitteilen, daß es mit Hilfe einer neu eingespielten Software für weitere, bislang noch nicht auswertbare Arten von Daten empfangsbereit ist. Das Endgerät, das diese Mitteilung empfängt, kann dann z.B. die von seiner Entscheidungsmatrix in einigen Kombinationen von Eingangsgrößen ausgegebenen Ausgangsgrößen modifizieren. War in z.B. aufgrund des bisherigen Softwarestandes des Partner-Endgerätes vor dem Versenden von Daten an das Partner-Endgerät eine Konvertierung der Daten erforderlich, kann durch den neuen Softwarestand auf eine solche Konvertierung verzichtet werden.

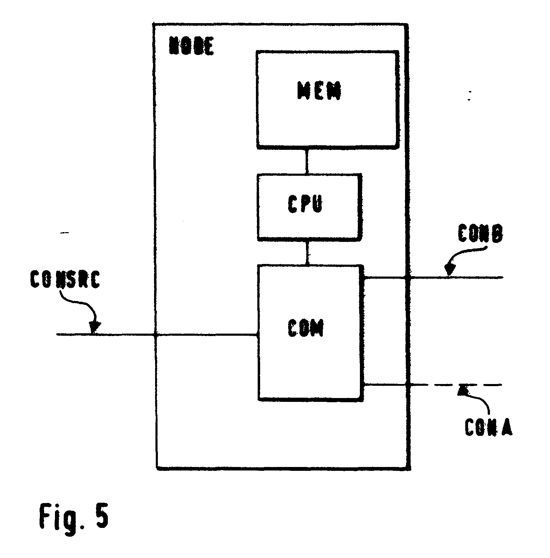

In Figur 5 ist ein Knoten NODE dargestellt, der in einem Telekommunikationsnetz eingesetzt werden kann. Zur einfachen Darstellung von Funktion und Wirkungsweise weist der Knoten NODE wesentliche Komponenten auf, die von dem Endgerät TER aus Figur 3 prinzipiell schon bekannt sind, nämlich den Speicher MEM, das Steuermittel CPU und die Kommunikationsschnittstelle COM. In der Praxis weisen der Speicher MEM und das Steuermittel CPU als Komponenten des Knotens NODE eine größere Leistungsfähigkeit auf als als Komponenten des Endgerätes TER. Die Kommunikationsschnittstelle COM ist bei dem Knoten NODE um einen Kommunikationsweg CONSRC erweitert, die zu einem ebenfalls nicht dargestellten Endgerät oder Knoten führt. Die Kommunikationsschnittstelle COM kann den Kommunikationsweg CONSRC mit dem Kommunikationsweg CONA oder CONB alternativ oder zugleich verbinden. Die Kommunikationsschnittstelle COM kann z.B. ein Koppelfeld sein. Die Kommunikationsverbindungen CONSRC, CONA und CONB stehen beispielhaft für weitere, in Figur 5 nicht dargestellte Kommunikationsverbindungen. Wie im Zusammenhang mit Figur 3 schon erklärt sind die Kommunikationsverbindungen CONA und CONB ebenso wie der Kommunikationsweg CONSRC beispielhafte Darstellungen, die für unterschiedliche physikalische Pfade, aber auch für unterschiedliche Kommunikationsformen stehen können. Im Gegensatz zu dem Endgerät TER weist der Knoten NODE keine separat ausgebildete Eingabevorrichtung INTER. Statt dessen werden dem Knoten NODE die für eine Klassifizierung einer Kommunikationsbeziehung erforderlichen Merkmale in Form von Eingangsdaten von einer über den Kommunikationsweg CONSRC angeschlossenen Telekommunikationseinrichtung, z.B. einem Endgerät oder einem Knoten, an die Kommunikationsschnittstelle COM übermittelt und von dort an das Steuermittel CPU weitergeleitet. Die Kommunikationsschnittstelle COM und das Steuermittel CPU erfüllen dann gemeinsam eine der Funktion der Eingabevorrichtung INTER vergleichbare Funktion, nämlich das Ermitteln der erforderlichen Eingangsdaten. Das Endgerät dient hier lediglich als Schnittstelleneinrichtung zur Erfassung der Eingangsdaten, zu der z.B. ein Tastenfeld oder eine Bedienoberfläche des Endgerätes eingesetzt wird.

Durch die Eingangsdaten wird der Knoten NODE dazu angewiesen, eine Kommunikationsbeziehung von dem Kommunikationsweg CONSRC ausgehend herzustellen oder eine bereits von dort ausgehende Kommunikationsbeziehung zu modifizieren. Die empfangenen Eingangsdaten gruppiert das Steuermittel CPU nach Anweisungen von aus dem Speicher MEM geladenen Befehlssequenzen in die Datengruppen INKP, INDT und INCT ein und lädt aus dem Speicher MEM eine Entscheidungsmatrix, in die das Steuermittel CPU die vorgruppierten Eingangsdaten dann eingibt. Als Ausgangsdaten aus dieser Entscheidungsmatrix gewinnt das Steuermittel CPU die für das Herstellen oder Modifizieren einer von dem Kommunikationsweg CONSRC ausgehenden Kommunikationsbeziehung erforderlich sind. Gemäß den so ermittelten Ausgangsdaten weist das Steuermittel CPU die Kommunikationsschnittstelle COM z.B. dazu an, den Kommunikationsweg CONSRC mit dem Kommunikationsweg CONB zu verbinden.

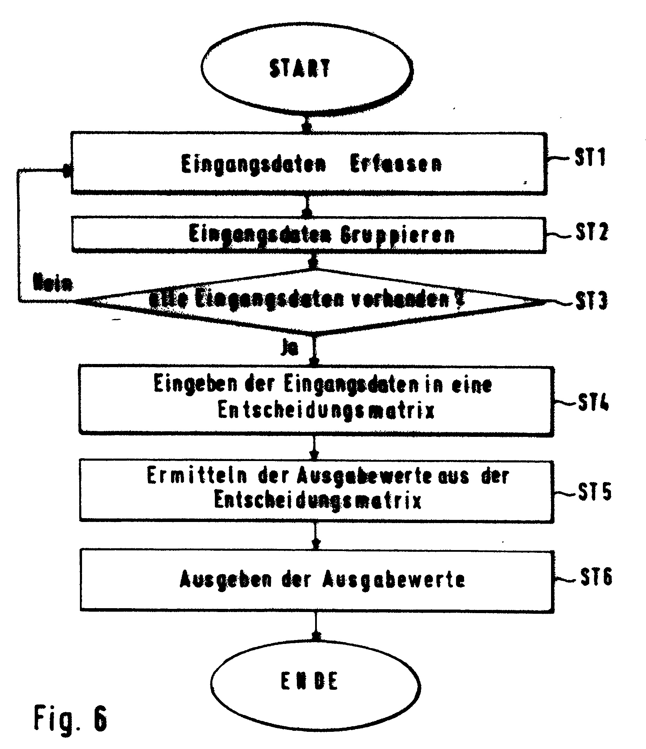

Wie bereits erläutert, können die Funktionen der Gruppiereinrichtung SORT und der Verarbeitungseinrichtung MAT aus Figur 1 von dem aus den Figuren 3 und 5 bekannten Steuermittel CPU in Zusammenwirkung mit dem Speicher MEM durch Laden und Ausführen von Befehlssequenzen ausgeführt werden. Es ist aber auch möglich, daß eine Telekommunikationseinrichtung, die über ein mit dem Steuermittel CPU vergleichbares Steuermittel und einen mit dem Speicher MEM vergleichbaren Speicher verfügt, durch in dem Speicher gespeicherte und von dem Steuermittel lesbare und ausführbare Befehlssequenzen eines erfindungsgemäßen Programmodules zur Ausführung der Erfindung ertüchtigt wird. Diese Befehlssequenzen werden üblicherweise in einer Programmiersprache, z.B. der Hochsprache 'C' oder der objektorientierten Programmiersprache 'C++', kodiert und in eine von dem Steuermittel lesbare und ausführbare Maschinensprache kompiliert. Wenn das erfindungsgemäße Programmodul in einzelne Funktionseinheiten aufgeteilt ist, wie im folgenden noch erläutert wird, so werden diese Funktionseinheiten nach dem Kompilieren noch durch einen sogenanntes "Linken" miteinander verbunden, so daß die Übergänge und Verzweigungen zwischen den einzelnen Funktionseinheiten, die sogenannten Programmsprünge, von dem Steuermittel bei der Ausführung des Programmodules nachvollzogen werden können. Das Steuermittel ist z.B. ein Prozessor eines Personal Computers oder einer Telekommunikationseinrichtung. Das Programmodul kann auf dem Speicher gespeichert und dort zur Ausführung der Befehlssequenzen von dem Steuermittel gelesen werden. Der Speicher kann z.B. ein magnetischer Speicher, z.B. eine Diskette oder eine Festplatte, sein oder ein elektronischer Speicher, z.B. ein EEPROM (Electrical Erasable Programmable Read Only Memory), das häufig in Telekommunikationsendgeräten eingesetzt wird. Ein Beispiel eines solchen Programmodules ist in Figur 6 als Programmodul PRG dargestellt. In der folgenden Beschreibung des Programmodules PRG wird angenommen, daß das Programmodul PRG in einem Speicher einer Telekommunikationseinrichtung abgelegt ist und von einem Steuermittel dieser Telekommunikationseinrichtung ausgeführt wird.

Im Interesse einer leicht verständlichen Darstellung ist das Programmodul PRG in Figur 6 in Form eines Flußdiagrammes dargestellt, in dessen Ablauf einzelne Schritte ausgeführt werden. Die einzelnen Schritte stehen jeweils für einen Befehls oder eine Folge von Befehlen, die jeweils eine funktionale Einheit, eine sogenannte Funktion, bilden. Diese funktionale Auftrennung ist zwar praxisgerecht, aber nicht unbedingt erforderlich. Das Programmodul PRG kann auch als eine einzige Funktion einem übergeordneten Programmes zum Aufbau oder zum Modifizieren einer Kommunikationsbeziehung dienen.

Ausgehend von einem Startfeld erfaßt das Programmodul zunächst in einem Schritt ST1 die für eine Klassifizierung einer Kommunikationsbeziehung erforderlichen Eingangsdaten. Dazu werden in Figur 6 nicht dargestellte Eingabemittel und Ausgabemittel von dem Steuermittel den Anweisungen des Schrittes ST1 folgend angesteuert. Die Anweisungen des Schrittes ST1 sind in einer Eingabefunktionseinheit, z.B. in einem Unterprogramm, zusammengefaßt. Die so erfaßten Eingangsdaten werden in einem Schritt ST2 in die aus Figur 1 bekannten Datengruppen INKP, INDT und INCT eingruppiert. Die Anweisungen des Schrittes ST2 sind zu einer Gruppierfunktionseinheit, ebenfalls z.B. zu einer Programmfunktion, gebündelt. Daran anschließend wird in einem optionalen Schritt ST3 überprüft, ob in dem Schritt ST1 für jede der Datengruppen INKP, INDT und INCT jeweils ein Eingangsdatum erfaßt worden ist. Wenn ein Eingangsdatum fehlt, wird wieder in den Schritt ST1 zurückverzweigt. Wenn der Schritt ST3 nicht in dem Programmodul enthalten sein soll, ist es auch möglich, daß die Eingangsdaten bereits von der Eingabefunktionseinheit in dem Schritt ST1 an einem der Eingabemittel in einer solchen Form zur Eingabe angeboten werden, daß eine fehlerhafte oder lückenhafte Eingabe unmöglich wird. Dazu kann das Eingabemittel so gestaltet sein, daß nur jeweils ein kompletter Satz von Eingangsdaten zur Eingabe angeboten wird und nur als kompletter Satz von einem Benutzer eingeben werden kann. Ein kompletter Satz von Eingangsdaten enthält jeweils ein Eingangsdatum aus den Datengruppen INKP, INDT und INCT. Oder die Telekommunikationseinrichtung, z.B. der in Figur 5 gezeigte Knoten NODE, erhält von einer zweiten Telekommunikationseinrichtung jeweils einen kompletten Satz von Eingangsdaten, bei dem die zweite Telekommunikationseinrichtung sicherzustellen hat, daß jeweils ein Eingangsdatum aus den Datengruppen INKP, INDT und INCT in einem kompletten Satz enthalten ist. Eine weitere Möglichkeit zum Verzicht auf den Schritt ST3 ergibt sich, wenn im Schritt ST1 von der Eingabefunktionseinheit bereits als Voreinstellung, als sogenannter Defaultwert, jeweils ein Eingangsdatum aus den Datengruppen INKP, INDT und INCT bereitgestellt wird, das von einem Benutzer optional durch Überschreiben mit einem geeigneten Wunsch-Eingangsdatum verändert, aber auch unverändert in den Schritt ST2 übernommen werden kann.

Nach dem Schritt ST3 werden die vorgruppierten Eingangsdaten in einem Schritt ST4 in eine Entscheidungsmatrix eingegeben, die in die Befehlssequenz des Schrittes ST4 als "Wenn-Dann"-Entscheidungsschrittfolge eingearbeitet sein kann, aber auch als separate Datenstruktur in dem Speicher der Telekommunikationseinrichtung abgelegt sein kann. Aus der Entscheidungsmatrix werden dann in einem Schritt ST5 Ausgabewerte ermittelt, die für die durch die Eingabe in Schritt ST1 gewünschte Kommunikationsbeziehung charakterisieren. Die Schritte ST3, ST4 und ST5 sind in Figur 6 zum besseren Verständnis als diskrete Schritte dargestellt, können aber auch leicht zu einer Verarbeitungsfunktionseinheit zusammengefaßt werden, insbesondere selhalb, weil von keinem dieser Schritte aus eine Verzweigung erforderlich ist.

Die in Schritt ST5 ermittelten Ausgabewerte werden in einem optionalen Schritt ST6 ausgegeben, z.B. an ein weiteres, in Figur 6 nicht dargestelltes Programmodul, das dann mit Hilfe weiterer Befehlssequenzen die gewünschte Kommunikationsbeziehung herstellt. Es ist aber auch möglich, daß noch im Schritt ST5 unter Verzicht auf Schritt ST6 die ermittelten Ausgabewerte aus der Entscheidungsmatrix nicht ausgegeben werden sondern lediglich in dem Speicher der Telekommunikationseinrichtung ein Index, ein sogenannter "Zeiger", abgelegt wird, der auf die ermittelten Ausgabewerte hinweist. Diese letztere Variante ist insbesondere dann leicht zu realisieren, wenn die Entscheidungsmatrix nicht in die Befehlssequenz des Schrittes ST4 eingearbeitet ist, sondern als separate Datenstruktur in dem Speicher abgelegt ist. Dann kann z.B. ein das Programmodul PRG aufrufendes übergeordnetes Steuerprogramm der Telekommunikationseinrichtung den Index auslesen und so direkt auf denjenigen Speicherplatz innerhalb des Speicherbereiches der Entscheidungsmatrix zugreifen, der die ermittelten Ausgabewerte enthält. Mit einem Schritt Ende, der sich an den Schritt ST6 anschließt, endet der Ablauf des Programmodules.

## Patentansprüche

1. Verfahren zur Herstellung einer Kommunikationsbeziehung mit den folgenden Schritten zur Ermittlung von für die Kommunikationsbeziehung erforderlichen Merkmalen:
- eine Eingabevorrichtung (IN) ermittelt erste Merkmale als Eingangsgrößen (INPUT), die für eine Klassifizierung der Kommunikationsbeziehung erforderlich sind, mit mindestens zwei an der Kommunikationsbeziehung zu beteiligende Kommunikationspartner betreffenden Merkmalen, mindestens eine im Rahmen der Kommunikationsbeziehung zu übertragende Datenart betreffenden Merkmalen und eine mögliche Verbindungsart für die Kommunikationsbeziehung betreffenden Merkmalen,
- die Eingabevorrichtung übermittelt die ersten Merkmale an eine Gruppiereinrichtung (SORT),
- die Gruppiereinrichtung gruppiert die ersten Merkmale in Merkmalsgruppen, wobei die Gruppiereinrichtung in eine erste Merkmalsgruppe (INKP) diejenigen der ersten Merkmale eingruppiert, die mindestens zwei an der Kommunikationsbeziehung zu beteiligende Kommunikationspartner betreffen, wobei die Gruppiereinrichtung in eine zweite Merkmalsgruppe (INDT) diejenigen der ersten Merkmale eingruppiert, die mindestens eine im Rahmen der Kommunikationsbeziehung zu übertragende Datenart betreffen und wobei die Gruppiereinrichtung in eine dritte Merkmalsgruppe (INCT) diejenigen der ersten Merkmale eingruppiert, die eine mögliche Verbindungsart für die Kommunikationsbeziehung betreffen,
- die Gruppiereinrichtung übermittelt die ersten Merkmale in Form der ersten, zweiten und dritten Merkmalsgruppe an eine Verarbeitungseinrichtung (MAT),
- die Verarbeitungseinrichtung vergleicht die ersten Merkmale in Form der ersten, zweiten und dritten Merkmalsgruppe mit jeweils in ersten, zweiten and dritten Reihen einer Entscheidungsmatrix(DEC) enthaltenen Merkmalsindizien und, wenn die ersten Merkmale mit der Merkmalsindizien einer Spalte dieser Entscheidungsmatrix (DEC) übereinstimmen, ermittelt von aus dieser Spalte von einer vierten Reihe dieser Entscheidungsmatrix erthaltenen Ausgangsdaten Ausgangsgrößen (OUTPUT) die für die für die Kommunikationsbeziehung eforderlichen Merkmale als zweite Merkmale dienen; und
mit dem weiteren Schritt, aufbauend auf diesen Ausgangsgrößen, eine Kommunikationsbeziehung herzustellen oder eine bestehende Kommunikationsbeziehung zu modifizieren.

2. Verfahren nach Anspruch 1, **dadurch gekennzeichnet, daß** die Eingabevorrichtung (IN) die ersten Merkmale als Eingangsgröße (INPUT) bereits vorgruppiert in Form der ersten, zweiten und dritten Merkmalsgruppe zur Auswahl bereitstellt.

3. Verfahren nach Anspruch 1, **dadurch gekennzeichnet, daß** die Eingabevorrichtung (IN) überprüft, ob aus jeder der drei Merkmalsgruppen jeweils mindestens ein Merkmal als Eingangsgröße ermittelt wird.

4. Verfahren nach Anspruch 1, **dadurch gekennzeichnet, daß** Merkmale jeweils vorhandener technischer Hilfsmittel als erste Merkmale verwendet werden.

5. Verfahren nach Anspruch 1, **dadurch gekennzeichnet, daß** über das Ermitteln der zweiten Merkmale hinaus die von der Verarbeitungseinrichtung ermittelten zweiten Merkmale von einer Telekommunikationseinrichtung zum Aufbau einer von dieser Telekommunikationseinrichtung ausgehenden Kommunikationsbeziehung eingesetzt werden.

6. Verfahren nach Anspruch 1, **dadurch gekennzeichnet, daß** das Verfahren als Ausgangspunkt zur Optimierung einer bestehenden Kommunikationsbeziehung angewandt wird, indem die jeweils aktuell gültigen Merkmale der Merkmalsgruppen zwischen mindestens zweien der an der Kommunikationsbeziehung beteiligten Kommunikationspartner ausgetauscht werden, die dann jeweils für die für die Kommunikationsbeziehung erforderlichen Merkmale ermittelt werden und die Kommunikationsbeziehung gemäß dieser erforderlichen Merkmale modifiziert wird.

7. Verfahren nach Anspruch 1, **dadurch gekennzeichnet, daß** zur Vorbereitung einer möglichen Kommunikationsbeziehung die für eine Klassifizierung dieser Kommunikationsbeziehung eforderlichen ersten Merkmale zwischen an der Kommunikationsbeziehung beteiligten Kommunikationspartnereinrichtungen ausgetauscht werden, auch wenn kein Auftrag zum Aufbau der Kommunikationsbeziehung an die Kommunikationspartnereinrichtungen ergangen ist

8. Endgerät (TER) zur Herstellung einer Kommunikationsbeziehung, derart ausgestaltet, daß, für eine Kommunikationsbeziehung erforderliche Merkmale ermittelt werden und an einer Eingabevorrichtung (INTER) erste Merkmale als Eingangsgrößen eingegeben werden, die für eine Klassifizierung der Kommunikationsbeziehung erforderlich sind, wobei das Endgerät eine Gruppiereinrichtung (CPU, MEM) und eine Verarbeitungseinrichtung (CPU/MEM) aufweist, die derart aufgebaut und miteinander sowie mit der Eingabevorrichtung verbunden sind, daß sie die Schritte zur Ermittlung von für die Kommunikationsbeziehung erforderlichen Merkmalen nach Anspruch 1 ausführen, wobei, aufbauend auf den ermittelten Ausgangsgrößen, eine Kommunikationsbeziehung hergestellt wird oder eine bestehende Kommunikationsbeziehung modifiziert wird.

9. Knoten (NODE) zur Herstellung einer Kommunikationsbeziehung, derart ausgestaltet, daß, für eine Kommunikationsbeziehung erforderliche Merkmale ermittelt werden und an einer Eingabevorrichtung erste Merkmale als Eingangsgrößen eingegeben werden, die für eine Klassifizierung der Kommunikationsbeziehung erforderlich sind, wobei der Knoten eine Gruppiereinrichtung (CPU, MEM) und eine Verarbeitungseinrichtung (CPU, MEM) aufweist, die derart aufgebaut und miteinander sowie mit der Eingabevorrichtung verbunden sind, daß sie die Schritte zur Ermittlung von für die Kommunikationsbeziehung erforderlichen Merkmalen nach Anspruch 1 ausführen, wobei, aufbauend auf den ermittelten Ausgangsgrößen, eine Kommunikationsbeziehung hergestellt wird oder eine bestehende Kommunikationsbeziehung modifiziert wird.

10. Programmodul (PRG) zur Herstellung einer Kommunikationsbeziehung, derart ausgestaltet, daß, für eine Kommunikationsbeziehung eine Kommunikationsbeziehung erforderliche Merkmale ermittelt werden und bei dem über eine Eingabefunktionseinheit (ST1) erste Merkmale als Eingangsgrößen eingegeben werden, die für eine Klassifizierung der Kommunikationsbeziehung erforderlich sind, wobei das Programmodul eine Gruppierfunktionseinheit (ST2) und eine Verarbeitungsfunktionsenheit (ST4, ST5, ST6) aufweist, die derart aufgebaut und miteinander sowie mit der Eingabefunktionseinheit verbunden sind, daß sie die Schritte zur Ermittlung von für die Kommunikationsbeziehung erforderlichen Merkmalen nach Anspruch 1 ausführen, wobei, aufbauend auf den ermittelten Ausgangsgrößen, eine Kommunikationsbeziehung hergestellt wird oder eine bestehende Kommunikationsbeziehung modifiziert wird.

11. Bedienoberfläche (UI) zur Herstellung einer Kommunikationsbeziehung für eine Telekommunikationseinrichtung, derart ausgeshaltet, daß mit der Bedienoberfläche für eine Kommunikationsbeziehung erforderliche Merkmale ermittelt werden und wobei bei der Bedienoberfläche an einer Eingabevorrichtung (TAR) erste Merkmale als Eingangsgrößen eingegeben werden, die für eine Klassifizierung der Kommunikationsbeziehung erforderlich sind, wobei die Bedienoberfläche eine Gruppiereinrichtung und eine Verarbeitungseinrichtung aufweist, die derart aufgebaut und miteinander sowie mit der Eingabevorrichtung verbunden sind, daß sie die Schritte zur Ermittlung von für die Kommunikationsbeziehung erforderlichen Merkmalen nach Anspruch 1 ausführen, wobei, aufbauend auf den ermittelten Ausgangsgrößen, eine Kommunikationsbeziehung hergestellt wird oder eine bestehende Kommunikationsbeziehung modifiziert wird.

## Claims

1. A process for establishing a communications relation with the following steps for determining features necessary for the communications relation:
- an input device (IN) determines initial features as input variables (INPUT) which are necessary for classification of the communications relation, having features which concern at least two communication partners to participate in the communications relation, features which concern at least one data type to be transmitted in the framework of the communications relation, and features which concern one possible connection type for the communications relation,
- the input device transmits the initial features to a sort device (SORT),
- the sort device sorts the initial features into features groups, whereby the sort device sorts into a first feature group (INKP) those features of the initial features which concern at least two communication partners to participate in the communications relation, whereby the sort device sorts into a second feature group (INDT) those features of the initial features which concern at least one data type to be transmitted in the framework of the communications relation, and whereby the sort device sorts into a third feature group (INCT) those features of the initial features which concern one possible connection type for the communications relation,
- the sort device transmits the initial features in the form of the first, second, and third feature groups to a processing device (MAT),
- the processing device compares the initial features in the form of the first, second, and third feature groups with feature indices in respective first, second, and third rows of a decision matrix (DEC), and where the initial features and the feature indices of a column of the decision matrix (DEC) are in agreement, the processing device determines output variables (OUTPUT) as second features required for the communications relation from output data held in this column and in a fourth row in the decision matrix; and
- with the further step, based on these output variables, of establishing a communications relation or modifying an existing communications relation.

2. A process according to Claim 1, **characterised in that** the input device (IN) prepares for selection the initial features as input variables (INPUT) already pre-grouped in the form of first, second and third feature groups.

3. A process according to Claim 1, **characterised in that** the input device (IN) checks whether at least one respective feature is determined as input variable from each of the three feature groups.

4. A process according to Claim 1, **characterised in that** features of respectively present technical aids are used as initial features.

5. A process according to Claim 1, **characterised in that** by determining the second features, the second features determined by the processing device are used by a telecommunications device for the purpose of constructing a communications relation originating from that telecommunications device.

6. A process according to Claim 1, **characterised in that** the process is used as the starting point for optimising an existing communications relation, with the features of the feature groups which are respectively currently valid being exchanged between at least two of the communication partners participating in the communications relation, which are then respectively determined for the features necessary for the communications relation, and the communications relation is modified in accordance with these necessary features.

7. A process according to Claim 1, **characterised in that** in order to prepare a possible communications relation the initial features necessary for classifying that communications relation are exchanged between communication partner devices participating in the communications relation, even if no instruction has reached the communication partner devices to construct the communications relation.

8. A terminal (TER) for establishing a communications relation, arranged such that features required for a communications relation are determined and initial features which are required for classification of the communications relation are inputted to an input device (INTER) as input variables, wherein the terminal has a sort device (CPU, MEM) and a processing device (CPU, MEM) which are constructed and joined together and with the input device in such manner that they carry out the steps according to claim 1 for determining features necessary for the communications relation, wherein based on the determined output variables, a communications relation is established or an existing communications relation is modified.

9. A node (NODE) for establishing a communications relation, arranged such that features required for a communications relation are determined and initial features which are required for a classification of the communications relation are inputted as input variables to an input device (INTER), wherein the node has a sort device (CPU, MEM) and a processing device (CPU, MEM) which are constructed and joined together and with the input device in such manner that they carry out the steps according to claim 1 for determining features necessary for the communications relation, whereby based on the determined output variables, a communications relation is established or an existing communications relation is modified.

10. A program module (PRG) for establishing a communications relation, arranged such that features required for a communications relation are determined and in which initial features are inputted to an input functional unit (ST1) as input variables which are necessary for a classification of the communications relation, wherein the program module has a sort functional unit (ST2) and a processing functional unit (ST4, ST5, ST6) which are constructed and joined together and to the input functional unit in such manner that they carry out the steps according to Claim 1 for determining features necessary for establishing the communications relation, whereby based on the determined output variables, a communications relation is established or an existing communications relation is modified.

11. A user interface (UI) for establishing a communications relation for a telecommunications facility arranged such that features required for a communications relation are determined with the user interface and whereby the initial features are inputted at the user interface to an input device (TAR) as input variables which are required for a classification of the communications relation, wherein the user interface has a sort device and a processing device which are constructed and joined together and with the input device in such manner that they carry out the steps according to Claim 1 for determining features necessary for establishing the communications relation, whereby based on the determined output variables, a communications relation is established or an existing communications relation is modified.

## Revendications

1. Procédé pour établir une relation de communication comprenant les étapes suivantes pour déterminer des caractéristiques indispensables pour la relation de communication :
- un dispositif d'entrée (IN) détermine des premières caractéristiques comme grandeurs d'entrée (INPUT), qui sont nécessaires pour une classification de la relation de communication, avec des caractéristiques concernant au moins deux correspondants de communication à impliquer dans la relation de communication, des caractéristiques concernant au moins un type de données à transmettre dans le cadre de la relation de communication et des caractéristiques concernant un type de liaison possible pour la relation de la communication,
- le dispositif d'entrée transmet les premières caractéristiques à un dispositif de groupement (SORT),
- le dispositif de groupement groupe les premières caractéristiques en groupes de caractéristiques, le dispositif de groupement groupant dans un premier groupe de caractéristique (INKP) celles des premières caractéristiques qui concernent au moins deux correspondants de communication à impliquer dans la relation de communication, le dispositif de groupement regroupant dans un second groupe de caractéristiques (INDT) celles des premières caractéristiques qui concernent au moins un type de données à transmettre dans le cadre de la relation de communication et le dispositif de groupement groupant dans un troisième groupe de caractéristique (INCT) celles des premières caractéristiques qui concernent un type de liaison possible pour la relation de communication,
- le dispositif de groupement transmet les premières caractéristiques sous la forme du premier, du second et du troisième groupes de caractéristiques à un dispositif de traitement (MAT),
- le dispositif de traitement compare les premières caractéristiques sous la forme du premier, du second et du troisième groupe de caractéristiques avec des indices de caractéristiques inclus respectivement dans les premières, les secondes et les troisièmes rangées d'une matrice de décision (DEC) et, lorsque les premières caractéristiques coïncident avec les indices de caractéristiques, d'une colonne de cette matrice de décision (DEC), détermine à partir de données de sortie obtenues à partir de cette colonne par une quatrième rangée de cette matrice de décision des grandeurs de sortie (OUTPUT) qui servent comme secondes caractéristiques pour les caractéristiques nécessaires pour la relation de communication ; et
avec l'autre étape consistant à établir sur la base de ces grandeurs de sortie une relation de communication ou à modifier une relation de communication existante.

2. Procédé selon la revendication 1, **caractérisé en ce que** le dispositif d'entrée (IN) met à disposition au choix les premières caractéristiques comme grandeur d'entrée (INPUT) déjà prégroupées sous la forme du premier, du second et du troisième groupes de caractéristiques.

3. Procédé selon la revendication 1, **caractérisé en ce que** le dispositif d'entrée (IN) vérifie si, à partir de chacun des trois groupes de caractéristiques, à chaque fois au moins une caractéristique est déterminée comme grandeur d'entrée.

4. Procédé selon la revendication 1, **caractérisé en ce que** des caractéristiques de moyens auxiliaires techniques respectivement présents sont utilisées comme premières caractéristiques.

5. Procédé selon la revendication 1, **caractérisé en ce que**, au-delà de la détermination des secondes caractéristiques, les secondes caractéristiques déterminées par le dispositif de traitement sont utilisées par un dispositif de télécommunication pour établir une relation de communication partant de ce dispositif de télécommunication.

6. Procédé selon la revendication 1, **caractérisé en ce que** le procédé est appliqué comme un point de sortie pour l'optimisation d'une relation de communication existante du fait que les caractéristiques respectivement actuellement valables des groupes de caractéristiques sont échangées entre au moins deux des correspondants de communication impliqués dans la relation de communication, qui sont déterminés alors respectivement pour les caractéristiques nécessaires pour la relation de communication et la relation de communication est modifiée selon ces caractéristiques nécessaires.

7. Procédé selon la revendication 1, **caractérisé en ce que**, pour préparer une relation de communication possible, les premières caractéristiques nécessaires pour une classification de cette relation de communication sont échangées entre des dispositifs de correspondants de communication impliqués dans la relation de communication, même s'il n'en résulte pas d'ordre pour établir la relation de communication à l'attention des équipements de correspondant de communication.

8. Terminal (TER) pour établir une relation de communication, conçu de telle sorte que des caractéristiques nécessaires pour une relation de communication sont déterminées et des premières caractéristiques en tant que grandeurs d'entrée sont entrées sur un dispositif d'entrée (INTER), lesquelles grandeurs sont nécessaires pour une classification de la relation de communication, le terminal présentant un dispositif de groupement (CPU, MEM) et un dispositif de traitement (CPU/MEM), qui sont structurés et reliés entre eux ainsi qu'au dispositif d'entrée de telle sorte qu'ils exécutent les étapes pour déterminer des caractéristiques nécessaires pour la relation de communication selon la revendication 1, une relation de communication étant établie sur la base des grandeurs de sortie déterminées ou bien une relation de communication existante étant modifiée.

9. Noeud (NODE) pour établir une relation de communication, conçu de telle sorte que des caractéristiques nécessaires pour une relation de communication sont déterminées et des premières caractéristiques en tant que grandeurs d'entrée sont entrées sur un dispositif d'entrée, lesquelles sont nécessaires pour une classification de la relation de communication, le noeud présentant un dispositif de groupement (CPU, MEM) et un dispositif de traitement (CPU, MEM), qui sont structurés et reliés entre eux ainsi qu'au dispositif d'entrée de telle sorte qu'ils exécutent les étapes pour déterminer des caractéristiques nécessaires pour la relation de communication selon la revendication 1, une relation de communication étant établie sur la base des grandeurs de sortie déterminées ou bien une relation de communication existante étant modifiée.

10. Module de programme (PRG) pour établir une relation de communication, conçu de telle sorte que des caractéristiques nécessaires pour une relation de communication sont déterminées et des premières caractéristiques en tant que grandeurs d'entrée sont entrées par une unité fonctionnelle d'entrée (ST1), lesquelles sont nécessaires pour une classification de la relation de communication, le module de programme présentant une unité fonctionnelle de groupement (ST2) et une unité fonctionnelle de traitement (ST4, ST5, ST6), qui sont structurées et reliées entre elles ainsi qu'à l'unité fonctionnelle d'entrée de telle sorte qu'elles exécutent les étapes pour déterminer des caractéristiques nécessaires pour la relation de communication selon la revendication 1, une relation de communication étant établie sur la base des grandeurs de sortie déterminées ou bien une relation de communication existante étant modifiée.

11. Interface utilisateur (UI) pour établir une relation de commutation pour un dispositif de télécommunication, conçue de telle sorte que des caractéristiques nécessaires pour une relation de communication sont déterminées avec l'interface utilisateur, et des premières caractéristiques en tant que grandeurs d'entrée étant entrées sur un dispositif d'entrée (TAR) dans le cas de l'interface utilisateur, lesquelles sont nécessaires pour une classification de la relation de communication, l'interface utilisateur présentant un dispositif de groupement et un dispositif de traitement, qui sont structurés et reliés entre eux ainsi qu'au dispositif d'entrée de telle sorte qu'ils exécutent les étapes pour déterminer des caractéristiques nécessaires pour la relation de communication selon la revendication 1, une relation de communication étant établie sur la base des grandeurs de sortie déterminées ou bien une relation de communication existante étant modifiée.
